# EUROPEAN PATENT SPECIFICATION

(11) **EP 3 599 810 B1**
(45) Date of publication and mention of the grant of the patent: **20.01.2021**
(21) Application number: 17712758.6
(22) Date of filing: 21.03.2017
(51) Int. Cl.: A01B 77/00, A01G 11/00

(54) **SYSTEM AND METHOD FOR PROCESSING SOIL**
SYSTEM UND VERFAHREN ZUR VERARBEITUNG VON ERDE
SYSTÈME ET PROCÉDÉ DE TRAITEMENT DE SOL

(43) Date of publication of application: 05.02.2020
(73) Proprietor: Soil Steam International AS, 3233 Sandefjord (NO)
(72) Inventor: LIMSETH, Finn, N-3138 Skallestad (NO); JOHANSEN, Kåre-Jan, N-3233 Sandefjord (NO); ØSTIGÅRD, Rune, N-3074 Sande (NO); LAKSESVELA, Arvid, N-3160 Stokke (NO); WIRGENES, Olav, N-3277 Steinsholt (NO); WESTRUM, Hans, Kristian, N-3214 Sandefjord (NO); STENSGAARD, Roy, N-3292 Stavern (NO)
(74) Representative: Onsagers AS
(86) International application number: PCT/EP2017/056727
(87) International publication number: WO 2018/171876

(56) References cited:
- EP-A1- 1 139 719
- DE-C1- 4 132 705
- US-A1- 2009 290 938

## Description

### TECHNICAL FIELD

The present invention relates to a system and a method for processing soil. More particularly, the invention relates to a system and a method for processing soil using a driving device arranged to move a soil processing device on a portion of a soil surface.

### BACKGROUND

There is a general need for methods and systems for processing soil, e.g., for destroying, removing or reducing the content of organic elements such as seeds, fungus, nematodes, or microorganisms in the soil. In particular, there is a need for such a method and a system which make use of a driving device, such as a vehicle, arranged to move a soil processing device on a portion of a soil surface.

In particular, there is a need for such methods and systems that do not rely on particular chemical agents for processing the soil. There is also a need for such methods and systems that fulfil environmental conditions of ecological development and sustainability.

German patent DE-4132705 C1 describes a soil decontamination vehicle which carries a steam boiler linked by a steam line to a steam plough.

Dutch published patent application NL-8100599 relates to a method for sterilizing soil in greenhouses. Steam is passed downwards through the soil. The soil surface is covered to prevent steam loss. A vacuum is generated below or in the soil to be sterilised by means of a system of pipes.

Norwegian published patent application NO-20005184 describes a mobile heat processing principle for soil. Steam or heated gas is drawn into the soil from a moving compartment that is pulled on the surface of the soil. The steam or heated gas is further drawn into a number of suction pipes that are conveyed through the soil with the same speed as the moving compartment. A spade device is arranged to make the soil porous. The compartment, suction pipes and the spade device are mounted on a sled or carriage that may be pulled by e.g. a tractor.

This prior art solution has certain disadvantages. For instance, the soil may in some instances be over-heated, resulting in burning of the soil, or under-heated, resulting in poor processing of the soil.

### SUMMARY

An object of the invention is to provide a system and a method for processing soil, which overcomes disadvantages of the prior art.

The invention provides a system and a method for processing soil as set forth in the appended claims.

As used herein, processing soil shall in particular be understood as destroying, removing or reducing the content of organic elements such as seeds, in particular seeds of weeds or unwanted seeds, or fungus, or nematodes, or microorganisms such as undesired microbes or bacteria, from the soil. Processing soil may include sterilizing soil.

### BRIEF DESCRIPTION OF THE DRAWINGS

Figure 1 is a schematic side view illustrating principles of a system for processing soil, during operation.
Figure 2 is a schematic block diagram illustrating a control subsystem included in the system 100.
Figure 3 is a schematic flow chart illustrating principles of a method for processing soil.

### DETAILED DESCRIPTION

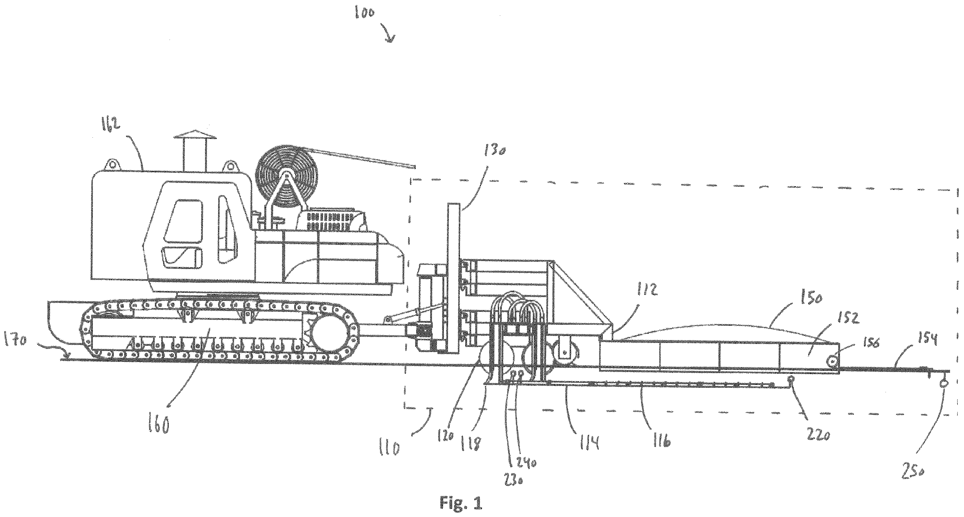

Figure 1 is a schematic side view illustrating principles of a system 100 for processing soil during operation.

The soil has an upper surface 170.

The system 100 comprises a soil processing device 110 which is arranged to be moved on the soil surface 170. The system further comprises a driving device 160, which is arranged to move the soil processing device 110 on a portion of the soil surface 170. As illustrated, the driving device 160 isa a vehicle which is attached to the soil processing device 110 and arranged to pull the soil processing device in a direction to the left on figure 1, during normal operation of the system 100.

In an alternative aspect, the vehicle 160 may be arranged to push the soil processing device 110 during normal operation. In still an alternative aspect, the vehicle 160 and the soil processing device 110 may be designed as one and the same unit.

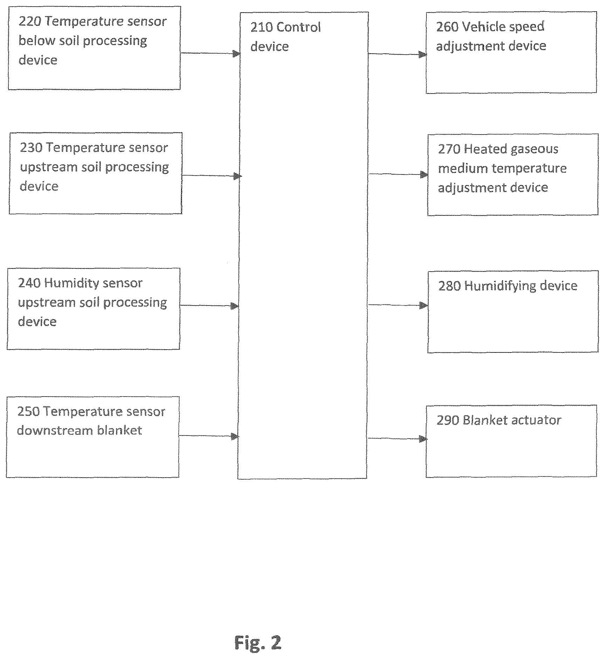

The vehicle includes at least an engine, which may be an internal combustion engine such as a diesel engine. The vehicle may further include a fuel tank, gear device, wheels and/or belts, etc. Alternatively, the vehicle may be electrically driven, by one or more electric motors powered by batteries. In any case, the speed of the vehicle may be set by signal input to a vehicle speed adjustment device 260, which has been further referred to below with reference to figure 2. The speed of the vehicle may optionally be overridden by a human operator, i.e., a driver. The vehicle may also bee steerable, either by electronic signals or by a human operator, i.e., the driver, or both.

In an alternative aspect, a winch (not shown) may be used as a driving device 160. For instance, a winch may be attached to the soil processing device 110, the winch having a wire wound on a drum or spool, the remote end of the wire being anchored to the ground or an object which is fixed with respect to the ground. The winch may be powered by a electric, hydraulic, pneumatic or internal combustion drive with a variable speed, which is controllable by a speed adjustment device corresponding to the vehicle speed adjustment device 260 mentioned above.

In still an alternative aspect, the winch may be reversed, in such a way that the powered drum or spool is anchored with respect to the ground, and the wire's remote end is attached to the soil processing device 110. In this case communication means should be present in order to transfer a speed control signal from a control device that may be located on the soil processing device, to the powered drum or spool.

As illustrated, the soil surface 170 is horizontal. It will be understood that the soil surface 170 may usually be substantially horizontal, but in certain cases the soil surface may have a slope, depending on varying natural conditions, in particular the topography of the area which is subject to the use of the system.

The soil processing device 110 includes a frame 112, which is arranged to slide or roll on the portion of the soil surface 170 during operation of the system.

The soil processing device 110 further includes at least one substantially horizontal pipe 114, which attached to the frame 112, extending along an underside of the frame 112. The horizontal pipe 114 is arranged at a predetermined depth, i.e., at a predetermined level below the underside of the frame 112.

Advantageously, the soil processing device 110 includes includes a plurality of parallel pipes 114. For instance, the number of parallel pipes may be between 10 and 20, e.g., 16. The pipes 114 may advantageously be arranged at substantially the same, predetermined depth.

During operation, the pipe or pipes 114 will be buried in the soil, at the predetermined depth, and they will usually be pulled through the soil by the movement of the vehicle 160.

In order to facilitate the positioning and movement of the pipes 114 at the predetermined depth in the soil during operation, a cutting blade 118 may advantageously be arranged at a leading portion of the at least one horizontal pipe 114.

Alternatively or in addition, in order to facilitate the positioning and movement of the pipes 114 at the predetermined depth in the soil during operation, a cutting wheel 120 may advantageously be arranged at the leading portion of the at least one horizontal pipe 114.

The cutting blade 118 and optionally the cutting wheel 120 may have the effect of making the soil more porous, which results in facilitated positioning and movement of the horizontal pipe 114. The cutting wheel 120 may in particular provide the advantage of cutting plant roots and possibly similar elements that are present below or on the surface 170 of the soil.

Each pipe 114 has a plurality of apertures 116 along its length. Although only one aperture has been shown in figure 1, is should be understood that the pipe 114 may have a substantial number of apertures along its length, for instance 2 through 10 apertures.

Each horizontal pipe 114 is connectable to a vacuum generating device that provides an underpressure in the pipe, i.e., in the air contained in the pipe 114. The vacuum generating device may include a pump, a fan, or an ejector device.

The soil processing device 110 further includes a protective cover 150 which is attached to an upper side of the frame 112. The cover 150 may be airtight or substantially airtight, and/or watertight or substantially watertight. The cover 150 may advantageously be made of a flexible material, or at least a part of the cover 150 may be made of a flexible material. In order to prevent or reduce heat loss from the compartment below the cover 150 to the surrounding environment, the cover 150 is advantagously made of a heat isolating material. Substantially vertical side walls 152 may be provided between the frame and the protective cover. The portion of the soil surface 170 and the cover 120, advantageously also the side walls 152, define a compartment that moves along the soil surface 170 during operation, i.e., when the vehicle 160 is in movement and pulls the soil processing device 110 on the soil surface 170. The side walls 152 may advantageously be provided as heat isolating side walls in order to prevent or reduce heat loss from the compartment below the cover 150 to the surrounding environment.

A conduit for a heated gaseous medium is arranged with at least one conduit opening within the compartment. The conduit for a heated gaseous medium is connectable to a heated gaseous medium generator 162. During operation, the heated gaseous medium generator 162 is connected to the heated gaseous medium conduit and provides heated gaseous medium to an inside of the compartment.

The heated gaseous medium typically includes air and steam.

In an aspect, the heated gaseous medium may be air with a predetermined or controlled fraction of steam.

In a particular aspect, the heated gaseous medium may be steam.

In another aspect, the heated gaseous medium may be dry air. Alternatively, the heated gaseous medium may include air, steam and additional gases or mixtures of gases, e.g. carbone dioxide, furnace gas or fumes.

The heated gaseous medium may have a variable and/or controllable temperature, provided by a heater device. The heater device may be part of the heated gaseous medium generator 162. The heated gaseous medium generator may have a signal input, for instance a power signal input. A power signal applied to the power signal input may affect the power of the heater device, resulting in variation of the temperature of the heated gaseous medium.

The heated gaseous medium may have a variable and/or controllable humidity, provided by a humidifying device 280, further described below with reference to figure 2. The humidifying device 280 may be a separate unit or a part of the heated gaseous medium generator 162. The humidifying device 280 may for instance include a steam generator which provides steam that is mixed with heated air in a particular mixing ratio in the heated gaseous medium generator 162. The humidifying device 280 may have a humidity signal input. A humidity signal applied to the power signal input may affect the humidity of the resulting heated gaseous medium, resulting in variable and/or controllable humidity of the heated gaseous medium. For instance, the humidity signal input may affect the mixing ratio of steam added to heated air.

The heated gaseous medium generator 162, optionally also the humidifying device 280, may advantageously be arranged on the vehicle 160. Alternatively, the heated gaseous medium generator, optionally also the humidifying device 280, may be arranged on the soil processing device 110. Arrangement of the heated gaseous medium generator 162 and optionally the humidifying device 280 on the vehicle will lead to the advantage of avoiding unnecessary load on the soil processing device 110.

As another option, the heated gaseous medium generator may be arranged stationary, i.e., not onboard the vehicle or the soil processing device 110. In this case, a flexible pipe or hose may be arranged to convey the heated gaseous medium from the stationary heated gaseous medium generator to the soil processing device 110.

As still another option, the heated gaseous medium generator may be arranged on a separate trailer or vehicle which is arranged to move along with the vehicle 160 and the the soil processing device 110.

When a plurality of substantially horizontal pipes 114 are arranged in the soil processing device 110, the plurality of pipes 114 may be interconnected with the vacuum generating device by means of a manifold.

In order to facilitate the sliding or rolling movement of the soil processing device along the surface 170 of the soil, and in order to level the soil surface after the digging action of the cutting blades 118 and/or the cutting wheels 120, a rotatable leveling drum 122 is advantageously arranged at the underside of the frame 112.

The system 110 may optionally include a lift-and-tilt arrangement 130. The lift-and-tilt arrangement 130 is arranged to lift and tilt the frame with respect to a rear portion of the vehicle 160.

A first temperatur sensor 220 is arranged to measure a first temperature in soil below the soil processing device 110. The first temperature sensor may in an aspect be arranged on a horizontal pipe 114. In another aspect, the first temperature sensor 220 may be attached to the frame 112, on a downwardly directed member which keeps the first temperature sensor 220 at a predetermined soil depth.

The first temperature sensor 220 may be arranged downstream (i.e., to the right in figure 1) the substantially horizontal tube 114, or at least downstream a substantial number of the apertures in the tube 114.

Optionally, a plurality of temperature sensors may be arranged below the soil processing device 110.

A blanket 154, typically made of a flexible membrane, may be attached to the rear part of the soil processing device 110. During use, the blanket is towed behind the soil processing device 110. The blanket, or a part of its length, may be rolled onto a motorized reel 156. The motorized reel may be actuated by a blanket actuator 290, further described below with reference to figure 2.

Elements or parts that require electrical power may be powered by a battery carried on the soil processing device 110 or on the vehicle 160. The battery may be rechargeable, and may in some instances be configured to be re-charged by e.g. an electric generator powered by an internal combustion engine on the vehicle 160.

Figure 2 is a schematic block diagram illustrating a control subsystem included in the system 100.

The system 100 includes a control device 210 with at least one input and at least one output. The control device 210 is configured to read signals provided to its inputs, process the signals according to control rules, and generate output signals that are supplied on the control device's outputs.

To this end, the control device 210 may, e.g., include a microprocessor with at least one bus that interconnects the processor, I/O devices, memories, etc. A computer program embodied as processing instructions in a memory circuit interconnected with the microprocessor causes the control device 210 to operate as disclosed herein. The microprocessor and some of its associated devices, i.e. memory circuit, I/O devices, etc., may optionally be implemented as a microcontroller.

In a basic aspect, a first temperature signal is provided by a first temperature sensor arranged below the soil processing device 110, as described above with reference to figure 1. The first temperature signal is supplied to an input of the control device 210.

Further, in the basic aspect, the control device 210 is configured to provide an output signal that represents the desired speed of the vehicle. This output signal is connected to the vehicle speed adjustment device 260. This way, the control device is configured to adjust the speed of the vehicle 160 in dependency of the signal 220 provided by the first temperature sensor 220.

Advantageously, the control device 210 is arranged to adjust the speed of the vehicle 160 in such a way that a substantially constant temperature is obtained at the first temperature sensor. This control functionality may e.g. be obtained by including in the control device 210 a proportional (P), proportional-derivative (PD), proportional-integral (PI), or proportional-integral-derivative (PID) controller. In a particular example, a PID controller may be used. Suitable parameters of the controller may be set by the skilled person. The controller functionality may be achieved by appropriate configuration of the processing instructions executed by the processing device. By implementing such control functionality in the control device 210, the speed of the vehicle 160 may be adjusted so as to obtain a substantially constant temperature at the first temperature sensor 220.

In an optional aspect, the system 100 and the control subsystem shown in figure 2 further comprises a second temperature sensor 230 arranged upstream the soil processing device 110. This second temperature sensor is arranged to measure a second temperature in soil upstream the soil processing device 110. In this case, the control device 210 may be further arranged to adjust a temperature of the heated gaseous medium in dependency of a signal provided by the second temperature sensor 230. This may be achieved by connecting an output of the control device 210 to a heated gaseous medium temperature adjustment device 270. For instance, the output may be supplied as a power adjustment signal as described above with reference to figure 1. The control device 210 may in this case, e.g., be configured to control the temperature of the heated gaseous medium to a substantially constant temperature, based on the measured temperature by the second temperature sensor 230. This control functionality may e.g. be obtained by including in the control device 210 another control module in the form of a proportional (P), proportional-derivative (PD), proportional-integral (PI), or proportional-integral-derivative (PID) controller. In a particular example, a PID controller may be used. Suitable parameters of the controller may be set by the skilled person. This controller functionality may be achieved by appropriate configuration of the processing instructions executed by the processing device. By implementing such control functionality in the control device 210, the temperature of the heated gaseous medium may be adjusted so as to become substantially constant at the second temperature sensor 230.

In another optional aspect, the system 100 and the control subsystem shown in figure 2 may comprise a humidity sensor 240 which is arranged to measure a humidity in the soil upstream the soil processing device 110. In this case, the control device 210 may be further arranged to adjust a humidity of the heated gaseous medium in dependency of a signal provided by the humidity sensor 240. This may be achieved by connecting an output of the control device 210 to a humidity signal of a humidifying device 280 as described above with reference to figure 1. The control device 210 may in this case, e.g., be configured to control the humidity of the heated gaseous medium to a substantially constant humidity, based on the measured humidity by the humidity sensor 240. This control functionality may e.g. be obtained by including in the control device 210 still another control module in the form of a proportional (P), proportional-derivative (PD), proportional-integral (PI), or proportional-integral-derivative (PID) controller. In a particular example, a PID controller may be used. Suitable parameters of the controller may be set by the skilled person. This controller functionality may be achieved by appropriate configuration of the processing instructions executed by the processing device. By implementing such control functionality in the control device 210, the humidity of the heated gaseous medium may be adjusted so as to become substantially constant at the humidity sensor 240.

In another optional aspect, the system 100 and the control subsystem shown in figure 2 may comprise a third temperature sensor 250 which is arranged to measure a temperature downstream the trailing blanket 154. In this case, the control device 210 may be further arranged to adjust the trailing length of the blanket 154 in dependency of a signal provided by the third temperature sensor 250. This may be achieved by connecting an output of the control device 210 to an input signal of a blanket actuator 290. The blanket actuator may, e.g., control the motorized reel 156 for the blanket 154, in order to roll the blanket onto the reel 156, causing the trailing portion of the blanket to be shorter, or to roll the blanket off the reel 156, causing the trailing portion of the blanket to be longer. For instance, the control device may be arranged to cause the blanket actuator 290 to roll the blanket onto the reel when the temperature measured at the temperature sensor 250 exceeds a desired value, and to roll the blanket off the reel when when the temperature measured at the temperature sensor 250 is lower than the desired value. The control device 210 may also include a proportional (P), proportional-derivative (PD), proportional-integral (PI), or proportional-integral-derivative (PID) controller, in particular a PID controller, in order to achive this functionality. The controller functionality may be achieved by appropriate configuration of the processing instructions executed by the processing device. By implementing such control functionality in the control device 210, the humidity of the heated gaseous medium may be adjusted so as to become substantially constant at the humidity sensor 240.

In another optional aspect, an additional temperature sensor (not shown) may be arranged to measure temperature of under-pressurized air in the pipe 114. The control device 110 may in this case be arranged to read this temperature and to control the vehicle speed adjustment device in such a way that the vehicle speed is increased when the measured temperature is increased. Alternatively or in addition, the control device 110 may be arranged to reduce the supply of heated gaseous medium when the measured temperature is increased.

The control device 210 may be further connected to communication devices (not shown), providing communication with a network, e.g. a mobile communication (GSM, 3G, 4G, 5G, etc.) network. The control device 210 may be further configured to transmit data related to measurements, parameters, etc. via the communication devices, to a remotely located computer device. Also, the control device 210 may be configured to receive configuration data, parameters, etc., from the remote computer device via the network and the communication devices.

The control device 210 may further include or be connected to a position data device, such as a GPS device (not shown), which enables position data to be obtained by the control device 210. Such data may in some instances be included in the control of steering and/or speed of the vehicle 160.

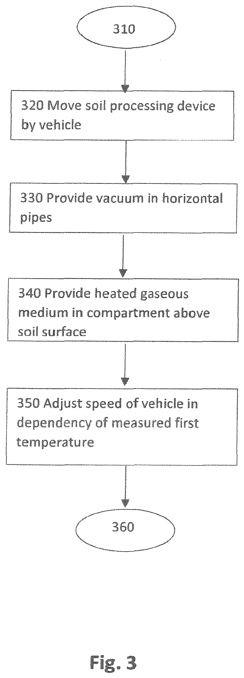

Figure 3 is a schematic flow chart illustrating principles of a method 300 for processing soil.

The method starts at the initiating step 310.

The method includes a movement step 320. In the movement step, a soil processing device, such as the soil processing device 110 disclosed previously, is moved on and along a portion of a soil surface 170 by means of a vehicle 160 attached to the soil processing device 110. In the movement step 320, a frame 112 of the soil processing device 110 is slid or rolled on the portion of the soil surface 170.

The method 300 further includes a vacuum providing step 330. In the vacuum providing step, an underpressure is provided, by means of a vacuum generating device, in at least one substantially horizontal pipe 114 which is attached to the frame 112 and which extends along an underside of the frame 112, at a predetermined depth, i.e., below the soil surface. As already disclosed with reference to the system 100, the pipe 114 has a plurality of apertures 116 along its length.

The method 300 further includes a heated gaseous medium providing step 340. In the heated gaseous medium providing step 340, a heated gaseous medium is provided to an inside of a compartment defined by the portion of the soil surface 170 and a protective cover 150 attached to an upper side of the frame 112. The heated gaseous medium is provided by a heated gaseous medium generator which may be arranged on the vehicle and conveyed to the inside of the compartment by means of a heated gaseous medium conduit. Further possible and/or optional details are disclosed above with reference to figures 1 and 2.

The method 300 further includes a control step 350. In the control step 350, a first temperature in soil below the soil processing device 110 is measured, and a speed of the vehicle 160 is adjusted in dependency of the measured first temperature.

Further optional steps may be included in the method 400, corresponding to features already described with reference to the system 100.

Although the steps of the method 300 have been illustrated in figure 3 as a sequence of time-discrete step, it will be understood that the method may advantageously be implemented by performing its various steps or elements simultaneously or concurrently. In particular, it will be understood that the vacuum provision, heated gaseous medium provision and control may advantageously be performed while the vehicle 160 and the soil processing device 110 are continuously moving on the soil surface 170.

The steps 320, 330, 340 and 350 are thus advantageously continuously repeated during the basic performance of the method. For completeness, a terminating step has been illustrated at 360.

Further features and possible aspects and advantages of the method 300 will be apparent with reference to the above disclosure of the system 100.

## Claims

1. System (100) for processing soil, comprising
a soil processing device (110), arranged to be moved on a soil surface; and
a driving device (160) arranged to move the soil processing device (110) on a portion of the soil surface (170);
the soil processing device (110) including:
- a frame (112), arranged to slide or roll on the portion of the soil surface (170) during operation of the system (100);
- at least one substantially horizontal pipe (114), attached to the frame (112), extending along an underside of the frame (112), at a predetermined depth, the pipe (114) having a plurality of apertures (116) along its length, the pipe (114) being connected to a vacuum generating device that provides an underpressure in the pipe (114);
- a protective cover (150) attached to an upper side of the frame (112), the portion of the soil surface (170) and the cover (120) defining a compartment;
- a conduit for a heated gaseous medium, connectable to device (162) which provides a heated gaseous medium to an inside of the compartment,
**characterized in that** the system further comprises
- a first temperature sensor (220) arranged to measure a first temperature in soil below the soil processing device (110), and
- a control device (210), configured to adjust a speed of the driving device (160) in dependency of a signal provided by the first temperature sensor.

2. System according to claim 1,
wherein the driving device (160) is a vehicle attached to the soil processing device (110).

3. System according to claim 1 or 2,
wherein the control device (210) is arranged to adjust the speed of the driving device (160) so as to obtain a substantially constant temperature at the first temperature sensor (220).

4. System according to claim 3,
wherein the control device includes a proportional, proportional-derivative, proportional-integral, or proportional-integral-derivative controller in order to adjust the speed of the vehicle (160) so as to obtain a substantially constant temperature at the first temperature sensor (220).

5. System according to one of the claims 1-4,
further comprising a second temperature sensor (230) arranged upstream the soil processing device (110), arranged to measure a second temperature in soil upstream the soil processing device (110), and
wherein the control device (210) is further arranged to adjust a temperature of the heated gaseous medium in dependency of a signal provided by the second temperature sensor (230).

6. System according to one of the claims 1-6,
further comprising a humidity sensor (240) arranged to measure a humidity in the soil upstream the soil processing device (110), and
wherein the control device (210) is arranged to adjust a humidity of the heated gaseous medium in dependency of a signal provided by the humidity sensor (240).

7. System according to one of the claims 1-6,
further comprising a third temperature sensor (250) arranged downstream a blanket (154), and wherein the control device 210 is further arranged to adjust a trailing length of the blanket (154) in dependency of a signal provided by the third temperature sensor (250).

8. System according to one of the claims 1-7,
wherein the at least one horizontal pipe (114) includes a plurality of parallel pipes (114) at substantially the same, predetermined depth.

9. System according to one of the claims 1-8,
wherein the heated gaseous medium includes air and steam.

10. System according to one of the claims 1-9,
wherein the first temperature sensor (220) is arranged on the at least one horizontal pipe (114).

11. Method for processing soil, comprising
- moving a soil processing device (110) on a portion of a soil surface (170) by means of a driving device (160) attached to the soil processing device (110), wherein a frame (112) of the soil processing device (110) is slid or rolled on the portion of the soil surface (170);
- providing, by means of a vacuum generating device, underpressure in at least one substantially horizontal pipe (114) which is attached to the frame (112) and which extends along an underside of the frame (112), at a predetermined depth, the pipe (114) having a plurality of apertures (116) along its length, and
- providing a heated gaseous medium to an inside of a compartment defined by the portion of the soil surface (170) and a protective cover (150) attached to an upper side of the frame 112),
**characterized in that** the method further comprises:
- measuring a first temperature in soil below the soil processing device (110), and
- adjusting a speed of the driving device in dependency of the measured first temperature.

## Patentansprüche

1. System (100) zur Bodenbearbeitung, umfassend
eine Bodenbearbeitungsvorrichtung (110), die ausgestaltet ist, um auf einer Bodenoberfläche bewegt zu werden; und
eine Antriebsvorrichtung (160), die ausgestaltet ist, um die Bodenbearbeitungsvorrichtung (110) auf einem Abschnitt der Bodenoberfläche (170) zu bewegen;
wobei die Bodenbearbeitungsvorrichtung (110) aufweist:
- einen Rahmen (112), der ausgestaltet ist, um während des Betriebs des Systems (100) auf dem Abschnitt der Bodenoberfläche (170) zu gleiten oder zu rollen;
- mindestens ein im Wesentlichen horizontales Rohr (114), das an dem Rahmen (112) angebracht ist und sich entlang einer Unterseite des Rahmens (112) in einer vorbestimmten Tiefe erstreckt, wobei das Rohr (114) entlang seiner Länge eine Mehrzahl von Öffnungen (116) aufweist, wobei das Rohr (114) mit einer Vakuumerzeugungsvorrichtung verbunden ist, die einen Unterdruck in dem Rohr (114) bereitstellt;
- eine Schutzabdeckung (150), die an einer Oberseite des Rahmens (112) angebracht ist, wobei der Abschnitt der Bodenoberfläche (170) und die Abdeckung (120) eine Abteilung definieren;
- eine Leitung für ein erwärmtes gasförmiges Medium, die mit Vorrichtung (162) verbunden werden kann, die ein erwärmtes gasförmiges Medium an ein Inneres der Abteilung liefert,
**dadurch gekennzeichnet, dass** das System ferner aufweist
- einen ersten Temperatursensor (220), der ausgestaltet ist, um eine erste Temperatur im Boden unterhalb der Bodenbearbeitungsvorrichtung (110) zu messen, und
- eine Steuervorrichtung (210), die konfiguriert ist, um eine Geschwindigkeit der Antriebsvorrichtung (160) in Abhängigkeit von einem Signal einzustellen, das von dem ersten Temperatursensor bereitgestellt wird.

2. System nach Anspruch 1,
wobei die Antriebsvorrichtung (160) ein Fahrzeug ist, das an der Bodenbearbeitungsvorrichtung (110) angebracht ist.

3. System nach Anspruch 1 oder 2,
wobei die Steuervorrichtung (210) ausgestaltet ist, um die Geschwindigkeit der Antriebsvorrichtung (160) einzustellen, um eine im Wesentlichen konstante Temperatur am ersten Temperatursensor (220) zu erhalten.

4. System nach Anspruch 3,
wobei die Steuervorrichtung eine Proportional-, Proportional- Differential-, Proportional-Integral- oder Proportional-Integral-Differential-Steuerung enthält, um die Geschwindigkeit des Fahrzeugs (160) so einzustellen, um am ersten Temperatursensor (220) eine im Wesentlichen konstante Temperatur zu erhalten.

5. System nach einem der Ansprüche 1-4,
ferner aufweisend einen zweiten Temperatursensor (230), der stromaufwärts der Bodenbearbeitungsvorrichtung (110) angeordnet ist und ausgestaltet ist, um eine zweite Temperatur im Boden stromaufwärts der Bodenbearbeitungsvorrichtung (110) zu messen, und
wobei die Steuervorrichtung (210) ferner ausgestaltet ist, um eine Temperatur des erwärmten gasförmigen Mediums in Abhängigkeit von einem Signal einzustellen, das von dem zweiten Temperatursensor (230) bereitgestellt wird.

6. System nach einem der Ansprüche 1-6,
ferner aufweisend einen Feuchtigkeitssensor (240), der ausgestaltet ist, um eine Feuchtigkeit im Boden stromaufwärts der Bodenbearbeitungsvorrichtung (110) zu messen, und
wobei die Steuervorrichtung (210) ausgestaltet ist, um eine Feuchtigkeit des erwärmten gasförmigen Mediums in Abhängigkeit von einem Signal einzustellen, das von dem Feuchtigkeitssensor (240) bereitgestellt wird.

7. System nach einem der Ansprüche 1-6,
ferner aufweisend einen dritten Temperatursensor (250), der stromabwärts einer Plane (154) angeordnet ist, und wobei die Steuervorrichtung 210 ferner ausgestaltet ist, um eine Nachlauflänge der Plane (154) in Abhängigkeit von einem Signal einzustellen, das von dem dritten Temperatursensor (250) bereitgestellt wird.

8. System nach einem der Ansprüche 1-7,
wobei das mindestens eine horizontale Rohr (114) mehrere parallele Rohre (114) bei im Wesentlichen derselben vorbestimmten Tiefe enthält.

9. System nach einem der Ansprüche 1-8,
wobei das erwärmte gasförmige Medium Luft und Dampf enthält.

10. System nach einem der Ansprüche 1-9,
wobei der erste Temperatursensor (220) an dem mindestens einen horizontalen Rohr (114) angeordnet ist.

11. Verfahren zur Bodenbearbeitung, umfassend
- Bewegen einer Bodenbearbeitungsvorrichtung (110) auf einem Abschnitt einer Bodenoberfläche (170) mittels einer Antriebsvorrichtung (160), die an der Bodenbearbeitungsvorrichtung (110) angebracht ist, wobei ein Rahmen (112) der Bodenbearbeitungsvorrichtung (110) auf den Abschnitt der Bodenoberfläche (170) geschoben oder gerollt wird,
- Bereitstellen eines Unterdrucks mittels einer Vakuumerzeugungsvorrichtung in mindestens einem im Wesentlichen horizontalen Rohr (114), das an dem Rahmen (112) angebracht ist und sich entlang einer Unterseite des Rahmens (112) in einer vorbestimmten Tiefe erstreckt, wobei das Rohr (114) entlang seiner Länge eine Mehrzahl von Öffnungen (116) aufweist, und
- Bereitstellen eines erwärmten gasförmigen Mediums für ein Inneres einer Abteilung, das durch den Abschnitt der Bodenoberfläche (170) und eine Schutzabdeckung (150), die an einer Oberseite des Rahmens (112) angebracht ist, definiert ist,
**dadurch gekennzeichnet, dass** das Verfahren ferner umfasst:
- Messen einer ersten Temperatur im Boden unterhalb der Bodenbearbeitungsvorrichtung (110) und
- Einstellen einer Geschwindigkeit der Antriebsvorrichtung in Abhängigkeit von der gemessenen ersten Temperatur.

## Revendications

1. Système (100) de traitement de sol, comprenant
un dispositif de traitement de sol (110), agencé pour être déplacé sur une surface de sol ; et
un dispositif d'entraînement (160) agencé pour déplacer le dispositif de traitement de sol (110) sur une portion de la surface de sol (170) ;
le dispositif de traitement de sol (110) comportant :
- un cadre (112), agencé pour glisser ou rouler sur la portion de surface de sol (170) pendant le fonctionnement du système (100) ;
- au moins un tuyau (114) sensiblement horizontal, fixé au cadre (112), s'étendant suivant un côté de dessous du cadre (112), à une profondeur prédéterminée, le tuyau (114) ayant une pluralité d'ouvertures (116) suivant sa longueur, le tuyau (114) étant raccordé à un dispositif de génération d'aspiration qui fournit une pression négative dans le tuyau (114) ;
- un capot protecteur (150) fixé à un côté supérieur du cadre (112), la portion de surface de sol (170) et le capot (120) définissant un compartiment ;
- un conduit pour un milieu gazeux chauffé, raccordable au dispositif (162) qui fournit un milieu gazeux chauffé à un intérieur du compartiment,
**caractérisé en ce que** le système comprend en outre
- un premier capteur de température (220) agencé pour mesurer une première température dans le sol au-dessous du dispositif de traitement de sol (110), et
- un dispositif de régulation (210), configuré pour régler une vitesse du dispositif d'entraînement (160) en fonction d'un signal fourni par le premier capteur de température.

2. Système selon la revendication 1,
dans lequel le dispositif d'entraînement (160) est un véhicule fixé au dispositif de traitement de sol (110).

3. Système selon la revendication 1 ou 2,
dans lequel le dispositif de régulation (210) est agencé pour régler la vitesse du dispositif d'entraînement (160) de façon à obtenir une température sensiblement constante au niveau du premier capteur de température (220).

4. Système selon la revendication 3,
dans lequel le dispositif de régulation comporte un régulateur proportionnel, proportionnel-dérivé, proportionnel-intégral ou proportionnel-intégral-dérivé afin de régler la vitesse du véhicule (160) de façon à obtenir une température sensiblement constante au niveau du premier capteur de température (220).

5. Système selon l'une des revendications 1 à 4,
comprenant en outre un deuxième capteur de température (230) agencé en amont du dispositif de traitement de sol (110), agencé pour mesurer une deuxième température dans le sol en amont du dispositif de traitement de sol (110), et
dans lequel le dispositif de régulation (210) est en outre agencé pour régler une température du milieu gazeux chauffé en fonction d'un signal fourni par le deuxième capteur de température (230).

6. Système selon l'une des revendications 1 à 6,
comprenant en outre un capteur d'humidité (240) agencé pour mesurer une humidité dans le sol en amont du dispositif de traitement de sol (110), et
dans lequel le dispositif de régulation (210) est agencé pour régler une humidité du milieu gazeux chauffé en fonction d'un signal fourni par le capteur d'humidité (240).

7. Système selon l'une des revendications 1 à 6,
comprenant en outre un troisième capteur de température (250) agencé en aval d'un tapis (154), et dans lequel le dispositif de commande (210) est en outre agencé pour régler une longueur de traînée du tapis (154) en fonction d'un signal fourni par le troisième capteur de température (250).

8. Système selon l'une des revendications 1 à 7,
dans lequel l'au moins un tuyau (114) horizontal comporte une pluralité de tuyaux (114) parallèles sensiblement à la même profondeur prédéterminée.

9. Système selon l'une des revendications 1 à 8,
dans lequel le milieu gazeux chauffé comporte de l'air et de la vapeur.

10. Système selon l'une des revendications 1 à 9,
dans lequel le premier capteur de température (220) est agencé sur l'au moins un tuyau (114) horizontal.

11. Procédé de traitement du sol, comprenant
- le déplacement d'un dispositif de traitement de sol (110) sur une portion d'une surface de sol (170) au moyen d'un dispositif d'entraînement (160) fixé au dispositif de traitement de sol (110), dans lequel un cadre (112) du dispositif de traitement de sol (110) est amené à glisser ou rouler sur la portion de la surface de sol (170) ;
- la fourniture, au moyen d'un dispositif de génération d'aspiration, d'une pression négative dans au moins un tuyau (114) sensiblement horizontal qui est fixé au cadre (112) et qui s'étend suivant un coté de dessous du cadre (112), à une profondeur prédéterminée, le tuyau (114) ayant une pluralité d'ouvertures (116) suivant sa longueur, et
- la fourniture d'un milieu gazeux chauffé à un intérieur d'un compartiment défini par la portion de la surface de sol (170) et un capot protecteur (150) fixé à un côté supérieur du cadre (112),
**caractérisé en ce que** le procédé comprend en outre :
- la mesure d'une première température dans le sol au-dessous du dispositif de traitement de sol (110), et
- le réglage d'une vitesse du dispositif d'entraînement en fonction de la première température mesurée.
